# EUROPÄISCHE PATENTSCHRIFT

(11) **EP 3 183 486 B1**
(45) Veröffentlichungstag und Bekanntmachung des Hinweises auf die Patenterteilung: **27.09.2023**
(21) Anmeldenummer: 15762919.7
(22) Anmeldetag: 24.08.2015
(51) Int. Cl.: B29C 65/06, B29C 65/16, F16L 53/38, F16L 47/02, F16L 11/04, B29C 65/00

(54) **KONFEKTIONIERTE MEDIENLEITUNG**
PREASSEMBLED MEDIA LINE
CONDUITE DE FLUIDES ASSEMBLÉE

(30) Priorität: 22.08.2014 DE 102014012272
(43) Veröffentlichungstag der Anmeldung: 28.06.2017
(73) Patentinhaber: Voss Automotive GmbH, 51688 Wipperfürth (DE)
(72) Erfinder: DE BEER, Daniel, 51766 Engelskirchen (DE); SPELTHANN, Heinz, 47661 Issum (DE); ZIERIS, Volker, 51399 Burscheid (DE); KEIL, Wolfgang, 57577 Hamm/Sieg (DE); EL KHAMIS, Ahmed, 51789 Lindlar (DE); SCHÖNEBERG, Christoph, 42929 Wermelskirchen (DE); RASCH, Dirk, verstorben (DE); AZZOLIN, Pascal, 51688 Wipperfürth (DE); PLIETSCH, Reinhard, 42929 Wermelskirchen (DE)
(74) Vertreter: Rebbereh, Cornelia
(86) Internationale Anmeldenummer: PCT/EP2015/001722
(87) Internationale Veröffentlichungsnummer: WO 2016/026581

(56) Entgegenhaltungen:
- EP-A1- 0 507 680
- WO-A1-98/57092
- WO-A1-2013/083274
- DE-A1-102006 034 697
- DE-A1-102008 017 922
- DE-A1-102010 053 737
- DE-A1-102012 112 563
- DE-U1-202007 010 502
- FR-A1- 2 911 942

## Beschreibung

Die Erfindung betrifft eine konfektionierte Medienleitung mit zumindest einer Medienleitung, insbesondere beheizbaren Medienleitung, mit Leitungswandung und einem inneren Leitungslumen zum Durchtritt von Medien, insbesondere eines gefriergefährdeten Mediums, und mit zumindest einem endseitig an der Medienleitung angeordneten Anschlussbauteil, wobei die Leitungswandung der zumindest einen Medienleitung aus zumindest zwei Materialschichten besteht.

Derartige konfektionierte Medienleitungen sind im Stand der Technik bekannt. Unter dem Begriff des Konfektionierens einer Medienleitung wird dabei die Endstufe der Herstellung einer einbaufertigen Medienleitung verstanden, wonach die Medienleitung mit zumindest einem Anschlussbauteil, wie Kupplungsteilen und/oder Leitungsverbindern, ausgerüstet ist und beispielsweise in einem Kraftfahrzeug eingebaut werden kann. Die Anschlussbauteile können einerseits zum Verbinden mehrerer Medienleitungen bzw. Teilmedienleitungen dienen, die zu einer gesamten Medienleitung verbunden werden, oder zum Verbinden einer Medienleitung mit einem Aggregat bzw. einer Anschlusseinrichtung eines Aggregats. Die Anschlussbauteile können dementsprechend in unterschiedlichster Form ausgebildet sein, wie beispielsweise als Kupplungsabschnitt zur Aufnahme eines Steckerteils, als mit der zumindest einen Medienleitung über Klebeverbindungen oder Schweißverbindungen verbindbare bzw. verbundene Anschlussabschnitte, als Dornabschnitt zum Aufdornen insbesondere von Schlauchleitungen, etc.

Insbesondere in Fahrzeugen werden konfektionierte beheizbare Medienleitungen zum Leiten von flüssigen gefriergefährdeten Medien verwendet. Die Medien durchströmen dabei das innere Leitungslumen der jeweiligen Medienleitung. Bei niedrigen Temperaturen droht das durch die konfektionierte Medienleitung strömende Medium einzufrieren, weswegen es bekannt ist, eine Beheizung von dieser und ggf. der mit dieser verbundenen Anschlussbauteile vorzusehen. Unter gefriergefährdeten Medien werden hier Medien verstanden, die aufgrund eines relativ hohen Gefrierpunktes bereits bei noch recht hohen Umgebungstemperaturen zum Gefrieren neigen, wodurch die Funktionsfähigkeit beispielsweise eines Fahrzeugs beeinträchtigt oder sogar erheblich gestört werden kann. Ersichtlich ist dies insbesondere bei wasserführenden Medienleitungen ebenso wie bei Medienleitungen, die von einer wässrigen Harnstofflösung als Medium durchströmt werden, wie z.B. AdBlue^{®}, der Fall, die als NOₓ-Reaktionsadditiv für Dieselmotoren mit sogenannten SCR-Katalysatoren eingesetzt wird (SCR=selectiv catalytic reduction). Es wird daher üblicherweise eine Beheizungsmöglichkeit für die Medienleitung bzw. zumindest Teile von dieser und oftmals auch für die Anschlussbauteile vorgesehen, um ein Einfrieren des Mediums innerhalb der konfektionierten Medienleitung zu vermeiden bzw. um ein Auftauen eines bereits eingefrorenen Mediums zu ermöglichen.

Bei der Anordnung der konfektionierten Medienleitung in einem Fahrzeug kann diese beispielsweise an einem Ende an einem Aggregat bzw. eine Komponente, wie beispielsweise eine Dosiereinheit im Bereich eines Fahrzeugmotors, angeschlossen werden und/oder an eine zweite konfektionierte Medienleitung, andererseits an eine Komponente bzw. ein anderes Aggregat, wie beispielsweise eine Pumpe eines Kraftfahrzeugstanks. Die endseitig an der konfektionierten Medienleitung vorgesehenen Anschlussbauteile können dabei an die jeweiligen Gegebenheiten der Verbindungsstellen angepasst sein oder werden, also beispielsweise an die Gegebenheiten einer Dosiereinheit und die einer Pumpe. Bei Anordnen des einen Endes der konfektionierten Medienleitung im Bereich einer Dosiereinheit eines Fahrzeugmotors und andererseits im Bereich der Pumpe eines Fahrzeugtanks, wird die konfektionierte Medienleitung abschnittsweise mit höchst unterschiedlichen Umgebungstemperaturen beaufschlagt, im Bereich des Fahrzeugmotors oder des Abgasstrangs mit sehr hohen Temperaturen, weswegen dieser Bereich als Heißbereich bezeichnet wird, und im Bereich beispielsweise eines Fahrzeugtanks mit ggf. recht niedrigen oder normalen Temperaturen, weswegen dieser Bereich als Standardbereich oder "Kaltbereich" bezeichnet wird. Die für die jeweils dort angeordneten Teilmedienleitungen bzw. einzelnen Medienleitungen, die zu der konfektionierten Medienleitung zusammengesetzt werden oder sind, verwendeten Materialien sind dementsprechend meist höchst unterschiedliche Materialien, einerseits hochtemperaturbeständige Materialien und andererseits Standardmaterialien. Die aus unterschiedlichen Materialien, insbesondere Kunststoffmaterialien, bestehenden einzelnen Medienleitungen werden entsprechend durch Anschlussbauteile, wie Steckverbinder aus Kunststoff und/oder Metall, miteinander verbunden zu der konfektionierten Medienleitung, die sich nachfolgend sowohl im Heißbereich als auch im Kaltbereich eines Fahrzeugs erstreckt. Ein Beispiel hierfür findet sich in der DE 10 2010 053 737 A1. Gemäß dieser Druckschrift des Standes der Technik wird eine beheizbare Fluidleitung mit zumindest einer Rohrleitung und zumindest einem sich über zumindest einen Teilbereich der Rohrleitungslänge erstreckenden elektrischen Leiter offenbart, wobei die Rohrleitung zumindest zwei Längenabschnitte aufweist, die hinsichtlich ihrer Materialeigenschaften und/oder ihrer konstruktiven Gestalt unterschiedlich ausgebildet sind. Ein erster Längenabschnitt besteht dabei aus einem ersten Material, das ein erstes Polymer enthält, und ein zweiter Längenabschnitt aus einem zweiten Material, das ein zweites Polymer enthält, wobei das Material des zweiten Längenabschnitts flexibler ist und/oder eine höhere Beanspruchbarkeit aufweist als das Material des ersten Längenabschnitts. Die Rohrwandung der Rohrleitung selbst ist zweischichtig aufgebaut und umfasst eine aus einem technischen Kunststoff, wie PA12, bestehende Außenwandung und eine aus einem Fluorpolymer, wie PTFE, bestehende Innenwand, wobei die Innenwand nach Art einer oberflächlichen Beschichtung der Außenwand und dementsprechend vergleichsweise dünn ausgeführt werden kann mit einer Maximalwandstärke von beispielsweise 300 µm und die dickere Außenwand die erforderliche mechanische Stabilität gewährleistet. Ferner ist offenbart, dass in dem anderen Längenabschnitt die Rohrleitung dreischichtig aufgebaut ist, wobei die Außenwandung aus einem Hochleistungskunststoff, wie gefülltem PPA, die Innenwandung aus einem Fluorpolymer, wie PTFE, und eine zwischen diesen beiden Wandungen angeordnete Verstärkung als Gewebeschicht aus Aramid ausgebildet ist.

Eine mehrschichtige Medienleitung ist beispielsweise auch aus der EP 2 462 371 B1 bekannt. Bei dem dort offenbarten beheizbaren Schlauchsystem mit einem fluidführenden inneren Schlauchteil, dessen Wandung von einem elektrischen Heizleiter beheizbar ist, kann der innere Schlauchteil einen doppelwandigen Aufbau aus einer inneren Lage aus Polyamid und einer äußeren Lage aus Polyamid mit einem zwischen diesen beiden Lagen angeordneten Verstärkungsgewebe aufweisen.

Ein Beispiel für eine konfektionierte Medienleitung mit einer mehrschichtigen Rohrleitung ist aus der DE 10 2012 112 563 A1 bekannt. Gemäß dieser Druckschrift des Standes der Technik ist insbesondere offenbart, zwischen einzelnen Schichten eine Haftvermittlerschicht vorzusehen, so dass ein dreischichtiger Rohrleitungswandungsaufbau erzielt wird.

Die DE 10 2008 017 922 A1 offenbart eine Laserschweißverbindung von Kunststoffrohren mit anderen Kunststoffteilen. Hierbei wird ein Ende des Kunststoffrohres mit einem rohrförmigen Ende des anderen Kunststoffteils überlappend zusammengesteckt, wobei das Kunststoffrohrende und das Kunststoffteilende im Bereich der Verbindung ein Innenmaß bzw. ein Außenmaß aufweisen und wobei das größte Außenmaß des im Bereich der Verbindung innen liegenden Endes größer ist als das kleinste Innenmaß des in diesem Bereich außen liegenden Endes, wodurch sich zwischen den beiden Enden ein Anpressdruck bildet, der den gegenseitigen Wärmekontakt während des Laserschweißens verbessert. Die zusammengesteckten Enden des Kunststoffrohres und des anderen Kunststoffteils bestehen vorwiegend aus Polyamiden und werden ohne Verwendung eines Dorns festgehalten, während ein zum Schweißen verwendeter Laserstrahl um die feststehende Rohrverbindung herum gelenkt wird.

Die FR 2 911 942 A1 offenbart ein Verfahren zum Anschließen eines Endteils eines mehrschichtigen Rohres an einen Kanal eines Elementes, wobei zumindest ein Teil des Rohrendes eine schweißbare Oberflächenschicht aufweist zum Aufbringen auf eine etwa ringförmige Wand des Elements. In einem Schritt wird der Teil der Oberflächenschicht des Abschnitts des Rohrendes gegen die Wand des Elementes gerieben zum Reibverschweißen des Abschnitts des Rohrendes und des Elements.

Die WO 98/57092 A1 offenbart eine Verbindung zwischen einem Fluidverbinderkörper und einem Kunststoffrohr, wobei die Verbindung zwischen beiden zumindest teilweise durch Reibschweißen hergestellt ist. Der Teil des Verbinders, der zur Aufnahme des Rohres ausgebildet ist, definiert innere und äußere Oberflächen, die ineinandergreifen, um eine durchgängige Umfangsdichtung zwischen dem Fluiddurchgang und der äußeren Umgebung zu bilden. Die Verwendung des mehrschichtigen koextrudierten Kunststoffrohres mit Zwischenschichten oder Verbindungsschichten ist besonders vorteilhaft, insoweit als separate innere und äußere Dichtungen zwischen dem Verbindergehäuse und den inneren und äußeren Rohrschichten hergestellt sind, um sicherzustellen, dass weder Systemfluide noch Fremdkörper an die Zwischenschichten des Rohres gelangen. Als Materialien für die innere und äußere Schicht wird Nylon 12 angegeben, als kompatibel zum Material des Verbinderkörpers. Ferner wird die innere Schicht des Kunststoffrohres aus Graphit oder einem anderen elektrisch leitfähigen Material offenbart, um statische Aufladung abzuleiten, die durch Fluid, das durch das Kunststoffrohr strömt, entsteht.

Die DE 20 2007 010 592 U1 offenbart eine konfektionierte Medienleitung mit einem Leitungsverbinder, bestehend aus einem Verbinderkörper mit einem Anschlussabschnitt, an dem eine Medienleitung angeschlossen ist, und mit einem Kupplungsabschnitt zum dichtenden Verbinden mit einem Gegenkupplungsteil, wobei die Medienleitung mit einem Heizdraht versehen ist und der Heizdraht im Verbindungszustand von Verbinderkörper und Medienleitung derart weitergeführt ist, dass er zumindest teilweise am Kupplungsabschnitt angeordnet ist. Der Verbinderkörper und die Medienleitung sind endseitig von einem insbesondere aus Gehäuseschalen gebildeten Gehäuse umschlossen, wobei die Dichtfunktion und eine Haltefunktion zwischen dem Gehäuse und dem Verbinderpaar aufgeteilt sind. Ferner kann der Verbinderkörper einendig dahingehend ausgebildet sein, dass er mit dem Leitungsrohr stoffschlüssig beispielsweise durch Verschweißen oder Verkleben verbunden wird. Hierbei bestehen die zu verbindenden Teile dann aus gleichen Materialen.

Bei der Verwendung der konfektionierten Medienleitung des Standes der Technik beispielsweise in einem Fahrzeug zum Transport von gefriergefährdetem Medium, wie AdBlue^{®}, bei einem Abgasnachbehandlungssystem wirken insbesondere beim Einfrieren des gefriergefährdeten Mediums hohe Kräfte nicht nur auf die Medienleitung selbst, sondern auch auf die endseitig an dieser angeordneten Anschlussbauteile ein. Diese Beaufschlagung könnte einerseits ggf. zu einem Trennen von Medienleitung und Anschlussbauteil und andererseits zu einer hohen Dehnung der Leitungswandung der Medienleitung, ggf. zur Rissbildung und somit zu einem Mangel an Dichtigkeit und dementsprechend Leckagen bzw. bei einem Riss ggf. zu einem vollständigen Ausfall führen, was jedoch unbedingt verhindert werden sollte.

Der vorliegenden Erfindung liegt daher die Aufgabe zugrunde, eine konfektionierte Medienleitung dahingehend fortzubilden, dass das Versagen bzw. der Ausfall bei einer starken Beanspruchung derselben so gut wie möglich sowohl im Bereich des Übergangs von Anschlussbauteil zu Medienleitung als auch im Bereich der Medienleitung selbst vermieden werden kann.

Die Aufgabe wird für eine konfektionierte Medienleitung nach Anspruch 1 gelöst.

Weiterbildungen der Erfindung sind in den abhängigen Ansprüchen definiert. Dadurch
wird eine konfektionierte Medienleitung mit zumindest einer Medienleitung, umfassend Leitungswandung und inneres Leitungslumen zum Durchtritt von Medium, und mit zumindest einem endseitig an der Medienleitung angeordneten Anschlussbauteil geschaffen, wobei die Leitungswandung der zumindest einen Medienleitung aus zumindest zwei Materialschichten besteht, bei der ein ungewolltes Trennen der Anschlussbauteile von der Medienleitung aufgrund Dehnung oder starker Druckausübung durch gefrierendes Medium innerhalb der Medienleitung dadurch vermieden wird, dass das zumindest eine Anschlussbauteil stoffschlüssig mit zumindest einer der Materialschichten der mehrlagigen Leitungswandung der Medienleitung verbunden ist. Um hier eine besonders gute stoffschlüssige Verbindung zu schaffen, ist das Material des Anschlussbauteils an das Material dieser Materialschicht der Leitungswandung, mit der das Anschlussbauteil stoffschlüssig verbunden ist, angepasst. Eine solche Anpassung bedeutet, dass die Materialien des Anschlussbauteils und dieser zumindest einen Schicht der Leitungswandung der Medienleitung, mit der das Anschlussbauteil stoffschlüssig verbunden werden soll bzw. verbunden ist, entspricht, also das gleiche oder ähnliche Material oder ein Material einer ähnlichen oder gleichen Materialklasse für diese zumindest eine Materialschicht der Leitungswandung und für das Anschlussbauteil verwendet wird.

Hierbei ist es möglich, dass insbesondere das Material des Anschlussbauteils modifiziert ist, um eine größere Stabilität für das Anschlussbauteil zu schaffen. Eine solche Modifizierung kann beispielsweise das Vorsehen einer Glasfaserverstärkung sein. Vorteilhaft gehört das Material des Anschlussbauteils der gleichen Materialklasse an wie das Material der zumindest einen mit dem Material des Anschlussbauteils zu verbindenden oder verbundenen Materialschicht der Leitungswandung. Die Modifizierung kann sich auch darauf beziehen, dass eine höhere Temperaturbeständigkeit hierdurch geschaffen wird, so dass eine Medienleitung bzw. Teilmedienleitung der konfektionierten Medienleitung für die Anordnung in einem Heißbereich geeignet ausgerüstet wird.

Hohe Temperaturen ertragende, hochtemperaturfeste Materialien, die für das Anordnen im Heißbereich geeignet sind, sind solche Materialien, die dauerhaft Temperaturen von mehr als 140 °C, insbesondere mehr als 160 °C, und kurzzeitig (bedeutet maximal 10 min.) mehr als 180 °C ertragen, dies auch mehrmals über die Lebensdauer der Medienleitung hinweg. Eine solche Materialmodifizierung kann für das Anordnen im Heißbereich jedoch nicht nur für das Anschlussbauteil, sondern auch für die dort angeordnete Medienleitung bzw. den dort angeordneten Medienleitungsabschnitt der konfektionierten Medienleitung erfolgen. Beispielsweise können als Materialien einer Materialklasse für die zumindest eine Materialschicht der Leitungswandung und das Anschlussbauteil Polyphthalamid (PPA) für die Leitungswandung und glasfaserverstärktes Polyphthlamid (PPA-GF) für das Anschlussbauteil verwendet werden. Ferner ist es beispielsweise möglich, für die zumindest eine Materialschicht der Leitungswandung Polyamid-12 (PA12) und für das Anschlussbauteil glasfaserverstärktes Polyamid-12 (PA12-GF) zu verwenden.

Die Materialien von Medienleitung und Anschlussbauteil der konfektionierten Medienleitungen des Standes der Technik sind nicht aneinander angepasst. Bei der erfindungsgemäßen konfektionierten Medienleitung ist das Material des Anschlussbauteils vorteilhaft insbesondere an das der äußeren Materialschicht der Medienleitung angepasst. Damit wird eine besonders gute stoffschlüssige Verbindung geschaffen. Die der äußeren Materialschicht benachbarte oder weitere Materialschicht(en) ist/sind vorteilhaft für das Haften an der äußeren bzw. jeweils benachbarten Materialschicht angepasst ausgebildet. Gerade durch das Anpassen der Materialien des Anschlussbauteils und der zumindest einen Materialschicht der Leitungswandung der Medienleitung, mit der das Anschlussbauteil verbunden werden soll bzw. verbunden ist, kann eine besonders gute und dichte sowie belastbare stoffschlüssige Verbindung geschaffen werden. Zum Erzielen einer solchen stoffschlüssigen sicheren Verbindung kann das Material des Anschlussbauteils an das Material zumindest der äußersten Materialschicht der Leitungswandung der Medienleitung angepasst sein. Bei Vorsehen von zumindest drei Materialschichten der Leitungswandung ist das Material des Anschlussbauteils vorteilhaft ebenfalls an das der äußersten Materialschicht der Leitungswandung der Medienleitung angepasst bzw. werden hier einander entsprechende Materialien ausgewählt. Bei letzterer Variante können eine oder mehrere Zwischenschichten vorgesehen werden zwischen der äußersten und der innersten Materialschicht, wobei diese Zwischenschichten der Verbindung bzw. dem Haften oder der Haftvermittlung zwischen der inneren und der äußeren Materialschicht dienen und dementsprechend aus einem anderen Material bestehen als die benachbarten Materialschichten. Das Vorsehen einer als Haftvermittlerschicht ausgebildeten Zwischenschicht ist nicht erforderlich, wenn beispielsweise die innere Materialschicht haftvermittelnde Eigenschaften aufweist, z.B. aus einem thermoplastischen Elastomer mit Haftvermittlereigenschaft besteht. Ferner kann die innere Materialschicht beispielsweise auch schlagzäh modifiziert sein, um eine ausreichende Stabilität der Medienleitung bzw. der Leitungswandung zu erzielen.

Hochtemperaturbeständige Kunststoffe, die für eine entsprechend im Heißbereich beispielsweise eines Fahrzeugs verwendbare Medienleitung bzw. Teilmedienleitungen einer konfektionierten Medienleitung geeignet sind, können beispielsweise den Materialgruppen eines hochtemperaturfesten Polyamids (PA HT), Fluorpolymeren bzw. Fluorkunststoffen, thermoplastischen Elastomeren (TPE) und hochtemperaturfesten Elastomeren (Elastomer HT) angehören. Hierbei eignet sich beispielsweise bei einem zweischichtigen bzw. zweilagigen Leitungswandungsaufbau zumindest einer der Medienleitungen der konfektionierten Medienleitung für die Außenschicht PA HT und für die Innenschicht ein Fluorkunststoff bzw. für die Außenschicht PA HT und für die Innenschicht TPE bzw. für die Außenschicht Polyphenylensulfid (PPS) und für die Innenschicht entweder ein Fluorkunststoff oder TPE. Bei Verwenden eines hochtemperaturfesten Polyamids (PA HT) für die Außenschicht kann ferner für die Innenschicht ein hochtemperaturfestes Elastomer (Elastomer HT) verwendet werden. Im Hinblick auf das Erzielen einer Hochtemperaturfestigkeit kann anstelle eines thermoplastischen Standardelastomers auch modifiziertes TPE, beispielsweise TPE-PEBA, verwendet werden, also TPE mit einem Polyamid als Basis. Ein Abschnitt der konfektionierten Medienleitung, der lediglich Standardtemperatur, also nicht besonders hohen Temperaturen ausgesetzt wird, kann aus Materialien, die Standardmaterialien für Normaltemperaturen sind, bestehen. Bei einer Außenschicht der Medienleitung bzw. Teilmedienleitung aus einem Normaltemperaturpolyamid (PA "NT" bzw. PA Standard) kann die Innenschicht entweder aus einem thermoplastischen Elastomer (TPE), einem oder mehreren Fluorkunststoffen oder einem Normaltemperaturelastomer (Elastomer "NT") bestehen. Bei der konfektionierten Medienleitung kann somit bei Vorsehen zweier Teilmedienleitungen bzw. zweier Medienleitungen, die miteinander verbunden sind und zusammen mit den jeweils an ihnen ebenfalls angeordneten und befestigten Anschlussbauteilen die konfektionierte Medienleitung bilden, zum Anordnen im Heißbereich beispielsweise eines Motorraums eines Fahrzeugs die erste Medienleitung bzw. Teilmedienleitung aus PPA bestehen und die zweite im Kaltbereich angeordnete Medienleitung bzw. Teilmedienleitung aus PA12, wobei beide Medienleitungen bzw. Teilmedienleitungen jeweils zweilagig ausgebildet werden können, mit einer äußeren Schicht aus PPA und einer inneren Schicht aus schlagzäh modifiziertem PPA bzw. mit einer Außenschicht aus PA12 und einer Innenschicht aus schlagzäh modifiziertem PA12.

Als stoffschlüssige Verbindung zum Verbinden von Anschlussbauteil und der zumindest einen Materialschicht der Leitungswandung der Medienleitung eignet sich insbesondere eine Schweißverbindung, beispielsweise Laserschweißen oder Reibschweißen. Zum Reibschweißen kann die Leitungswandung z.B. in einer taschenartigen Ausnehmung des Anschlussbauteils aufgenommen und zumindest eine der beiden Materialschichten, die bezüglich ihres Materials an das Material des Anschlussbauteils angepasst ist, durch Reibschweißen mit dem Anschlussbauteil stoffschlüssig verbunden werden. Für den Reibschweißvorgang kann dementsprechend das Anschlussbauteil gegenüber der Medienleitung rotiert werden bzw. umgekehrt die Medienleitung gegenüber dem Anschlussbauteil.

Wenn das Material der innersten Schicht der Leitungswandung der Medienleitung eine höhere Dehnfähigkeit, insbesondere höhere Streckdehnung, aufweist als das Material der äußersten Schicht der Leitungswandung, kann hierdurch eine besonders gute Dehnfähigkeit der Medienleitung erzielt und eine unerwünschte Beschädigung auch bei innerhalb der Medienleitung gefrierendem Medium sehr gut vermieden werden, da die Dehnung der inneren Schicht dazu führt, dass die dabei auftretende Kraft an die äußere Schicht weitergeleitet wird, es jedoch nicht zu einem Reißen der Schichten der Leitungswandung der Medienleitung kommt. Beispiele für Materialien, die für eine dehnfähige innere Schicht verwendet werden können, sind z.B. ETFE oder TPE oder PPA, das vorteilhaft bei höheren Temperaturen nicht degradiert, somit auch im Hochtemperaturbereich verwendet werden kann. Zum Vermeiden einer Rissbildung kann somit die innere Schicht sich dehnen, während die äußere Schicht für eine mechanische Stabilität der Medienleitung sorgt.

Die äußerste Materialschicht der Leitungswandung der Medienleitung besteht vorteilhaft aus zumindest einem der Medienleitung mechanische Festigkeit verleihenden Material und weist eine Streckdehnung bzw. elastische Dehnung von 0,5 - 4%, insbesondere 1,3% auf. Das Material der innersten Schicht der Leitungswandung der Medienleitung weist vorteilhaft eine 10 - 30% höhere Dehnfähigkeit als das der äußersten Schicht der Leitungswandung der Medienleitung auf. Insbesondere weist das Material der innersten Schicht der Leitungswandung eine 20% höhere Dehnfähigkeit als die äußerste Schicht von dieser auf und liegt im Bereich von 3 - 11%, insbesondere 5%. Eine mittlere Materialschicht kann beispielsweise eine Streck- bzw. elastische Dehnung von 2 bis 5%, insbesondere 2,5% aufweisen. Es hat sich gezeigt, dass beispielsweise bei einem dreilagigen Leitungswandungsaufbau die maximale Dehnung der innersten Schicht etwa 10% betragen sollte, die der mittleren Schicht bis zu 5% und die der äußersten Schicht etwa 3%.

Als weiter vorteilhaft erweist es sich, wenn zudem die äußerste Materialschicht der Leitungswandung der Medienleitung zumindest die gleiche Stärke aufweist wie die innerste Materialschicht von dieser, wobei die äußerste Materialschicht auch dicker oder sehr viel dicker als die innerste Materialschicht dimensioniert sein kann, somit eine sehr viel größere Schichtdicke aufweisen kann. Die Dimensionierung kann hierbei in Abhängigkeit von dem tatsächlichen Durchmesser und der Gesamtwandstärke der Leitungswandung der Medienleitung erfolgen, wobei diese beispielsweise Abmessungen von Durchmesser und Wandstärke von 4 × 1 mm, 5 × 1 mm, 6 × 1 mm oder auch 8 × 1 mm, insbesondere 3,6 × 0,8 mm aufweisen kann. Durch das Vorsehen der unterschiedlichen Dehnfähigkeit der innersten und der äußersten Schicht der Medienleitung können sonst im Stand der Technik auftretende Risse in der Leitungswandung der Medienleitung vor allem bei gefrierendem Medium innerhalb der Medienleitungen bzw. von deren Leitungslumen, was zu einem Volumenzuwachs und zu axialem und/oder radialem Reißdruck führt, vorteilhaft vermieden werden. Der auf die Leitungswandung durch das gefrierende Medium einwirkende Druck kann dementsprechend durch die sehr dehnfähige innerste Materialschicht der Medienleitungswandung aufgefangen werden.

Die Materialschichten der zumindest einen Medienleitung sind miteinander verbunden. Eine erste Schicht aus PA12, hierüber eine Schicht aus TPE und hierüber wieder eine Schicht aus PA12 können ohne Haftvermittler in einem Arbeitsschritt zusammen bzw. gleichzeitig übereinander coextrudiert werden. Die innere PA12-Schicht ist, je nach dem, welches Medium durch die Medienleitung strömt, eine sogenannte Opferschicht, wird von dem Medium gegebenenfalls angegriffen und möglicherweise zerstört bzw. aufgelöst. Bei einer für höhere Temperaturen geeigneten Medienleitung kann eine erste Schicht aus PPA, über diese eine Schicht aus TPE und hierüber eine weitere Schicht aus PPA extrudiert werden. Es können jedoch auch lediglich zwei Schichten extrudiert werden, also z.B. eine erste, innere Schicht aus TPE und hierüber eine Schicht aus PA12 oder eine erste, innere Schicht aus TPE und eine zweite, äußere Schicht aus PPA.

Die konfektionierte Medienleitung kann zumindest zwei Teil-Medienleitungen mit zumindest einer Trenn- bzw. Anschlussstelle zwischen diesen und mit jeweils zwei endseitigen Anschlussbauteilen an den Teil-Medienleitungen oder zumindest zwei Medienleitungsabschnitte mit endseitigen Anschlussbauteilen umfassen, wobei zumindest eine Schicht der zumindest einen Teil-Medienleitung oder des zumindest einen Medienleitungsabschnitts zum Anordnen in einem Heißbereich aus hochtemperaturfestem Material besteht, insbesondere bei zumindest drei Materialschichten eine mittlere Schicht oder bei zwei Materialschichten zumindest eine äußere Schicht aus einem hochtemperaturfesten Material besteht. Anschlussbauteil kann beispielsweise ein Steckverbinder, umfassend einen Steckerteil und einen Kupplungsteil, sein. Auch andere Arten von Anschlussbauteilen können insbesondere stoffschlüssig mit zumindest einer der Materialschichten der Medienleitungswandung verbunden werden.

Ferner ist es möglich, die äußere und die innere Materialschicht auch mehrschichtig auszubilden, wobei jeweils zumindest eine Schicht der mehrschichtigen äußeren Materialschicht vorteilhaft für die mechanische Stabilität und thermische Stabilität sorgt und zumindest eine Schicht der mehrschichtigen inneren Materialschicht dehnfähiger als die äußere oder eine der anderen Materialschichten ist, also eine höhere Streck- oder elastische Dehnfähigkeit als diese aufweist. Ein Beispiel für eine zweischichtige äußere Materialschicht sind eine äußerste bzw. erste äußere Materialschicht aus PPA und eine zweite äußere, in der Leitungswandung unter der ersten äußeren Materialschicht angeordnete Materialschicht aus modifiziertem PPA. Eine mittlere Materialschicht kann z.B. aus TPE-Haftvermittlerschaum bestehen und eine erste innere Materialschicht, die der mittleren Materialschicht benachbart ist, aus PA612 und eine zweite innere Materialschicht, die innerste, die also benachbart zu dem Leitungslumen angeordnet ist und dieses begrenzt, aus ETFE. Eine andere Ausführungsvariante einer solchen Medienleitung mit mehrschichtiger innerer und äußerer Materialschicht kann beispielsweise eine dreischichtige äußere Materialschicht mit einer äußersten bzw. ersten äußeren Materialschicht aus PPA, einer zweiten äußeren, zu der ersten äußeren Materialschicht benachbarten Materialschicht aus modifiziertem PPA und eine dritte äußere Materialschicht, die der zweiten äußeren Materialschicht benachbart ist und z.B. aus PA612 besteht, umfassen. Eine mittlere zu der dritten äußeren Materialschicht benachbarte Materialschicht kann z.B. aus TPE-Haftvermittlerschaum bestehen. Benachbart zu dieser mittleren Materialschicht kann eine einschichtige innere Materialschicht vorgesehen sein, die z.B. aus ETFE besteht.

Zur näheren Erläuterung der Erfindung werden im Folgenden Ausführungsbeispiele von dieser näher anhand der Zeichnungen beschrieben. Diese zeigen in:
- Figur 1: eine Prinzipskizze einer erfindungsgemäß konfektionierten Medienleitung, verbunden mit einerseits einer Dosierstelle im Bereich eines Fahrzeugsmotors und andererseits einer Pumpe eines Fahrzeugstanks,
- Figur 2: eine Längsschnittansicht als Halbschnitt einer erfindungsgemäßen stoffschlüssigen Verbindung eines Anschlussbauteils und einer erfindungsgemäßen Medienleitung, wobei von beiden Komponenten lediglich Abschnitte gezeigt sind,
- Figur 3: eine Längsschnittansicht als Halbschnitt einer weiteren Ausführungsform einer erfindungsgemäßen stoffschlüssigen Verbindung eines Anschlussbauteils und einer erfindungsgemäßen Medienleitung, wobei von beiden Komponenten lediglich Abschnitte gezeigt sind, und
- Figur 4: eine Querschnittsansicht einer erfindungsgemäßen Medienleitung mit innerer Materialschicht und äußerer Materialschicht und mit eingezeichnetem Spannungsverlauf bzw. Dehnungsverlauf.

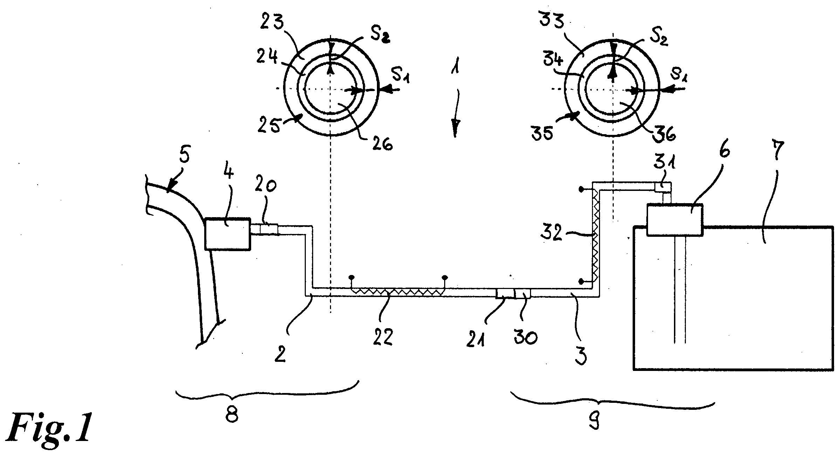

Figur 1 zeigt eine Prinzipskizze einer konfektionierten Medienleitung 1, umfassend eine erste Teil-Medienleitung 2 und zweite Teil-Medienleitung 3. Die beiden Teil-Medienleitung 2, 3 weisen an Ihren jeweiligen Enden Anschlussbauteile 20,21 bzw. 30,31 auf, die als Steckverbinder ausgebildet sein können. Das Anschlussbauteil 21 der ersten Teil-Medienleitung 2 ist mit dem Anschlussbauteil 30 der zweiten Teil-Medienleitung 3 verbunden. Insbesondere ist eines der beiden Anschlussbauteile in Form eines Steckerteils und das andere in Form eines Kupplungsteil ausgebildet, die ineinander gesteckt sind.

Die konfektionierte Medienleitung 1 ist über das Anschlussbauteil 20 mit einer Dosierstelle 4 eines Fahrzeugmotors 5, der in Figur 1 lediglich angedeutet ist, und über das Anschlussbauteil 31 mit einer Pumpe 6 eines Fahrzeugstanks 7 verbunden.

Beide Teil-Medienleitungen 2,3 weisen jeweils zumindest ein Heizelement 22,32 zum Beheizen der Teil-Medienleitungen 2,3 bzw. zumindest eines Abschnitts von diesen auf. Dies ist ebenfalls in Figur 1 angedeutet.

Beide Teil-Medienleitungen 2,3 sind jeweils zweilagig aufgebaut, weisen zumindest zwei Materialschichten 23,24 bzw. 33,34 auf. Die Materialien dieser einzelnen Schichten können unterschiedlich oder ähnlich sein, sind in jedem Fall angepasst ausgewählt an den herrschenden Temperaturbereich der jeweiligen Teil-Medienleitung 2 bzw. 3, in dem diese angeordnet ist. Die erste Teil-Medienleitung 2 ist im sogenannten Heißbereich 8 angeordnet, in dem die Umgebungstemperatur der konfektionierten Medienleitung vergleichsweise hoch ist aufgrund der Nähe zum Fahrzeugmotor 5 des Kraftfahrzeugs, in dem die konfektionierte Medienleitung 1 eingebaut ist. Im sogenannten Kaltbereich 9 sind hingegen die zweite Teil-Medienleitung 3 und auch Pumpe 6 und Fahrzeugtank 7 angeordnet, wobei in diesem Kaltbereich 9 die Umgebungstemperatur eher niedrig ist, so dass bei niedrigen Außentemperaturen gerade in diesem Bereich ein Einfrieren des durch die konfektionierte Medienleitung einströmenden Mediums droht.

Die beiden Teil-Medienleitungen 2,3 weisen jeweils die äußere und die innere Materialschicht 23,24 bzw. 33,34 auf, die zusammen die jeweilige Leitungswandung 25 bzw. 35 bilden. Von der jeweiligen Leitungswandung wird ein inneres Leitungslumen 26 bzw. 36 umgeben, durch das das insbesondere gefriergefährdete Medium, wie wässrige Harnstofflösung, auch als AdBlue^{®} bezeichnet, strömt. Die Anschlussbauteile 20,21 bzw. 30,31 sind jeweils mit einer der Materialschichten 23,24 bzw. 33,34 stoffschlüssig verbunden. Zu diesem Zweck erfolgt die Materialauswahl für die Anschlussbauteile 20,21,30,31 entsprechend passend zu dem Material insbesondere der jeweiligen äußeren Materialschicht 23 bzw. 33 der Leitungswandung 25 bzw. 35 der beiden ersten und zweiten Teil-Medienleitungen 2,3. Als passende Materialien werden hier Materialien gewählt, die der gleichen Materialklasse angehören, wie beispielsweise PPA bei der ersten Teil-Medienleitung 2, die im Heißbereich 8 angeordnet ist, oder PA12 für die zweite Teil-Medienleitung 3 bzw. die mit dieser verbundenen Anschlussbauteile 30,31, da diese im Kaltbereich 9 angeordnet sind. Für die jeweiligen Anschlussbauteile 20, 21 bzw. 30,31 kann beispielsweise ein glasfaserverstärktes Material derselben Materialklasse verwendet werden, also für die Anschlussbauteile 20,21 dementsprechend ein PPA-GF, also ein glasfaserverstärktes PPA, bzw. für die Anschlussbauteile 30,31 ein PA12-GF, somit ein glasfaserverstärktes PA12.

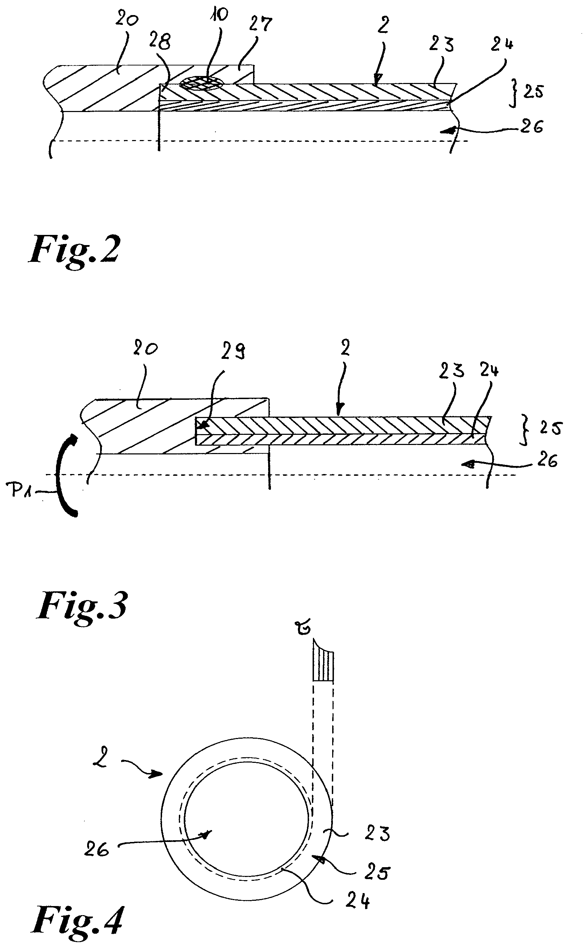

Die Figuren 2 und 3 zeigen zwei verschiedene Möglichkeiten, die Anschlussbauteile 20,21 bzw. 30,31 mit den jeweiligen insbesondere äußeren Materialschichten 23 bzw. 33 der beiden Leitungswandungen 25 bzw. 35 der beiden Teil-Medienleitungen 2,3 zu verbinden. In Figur 2 ist dabei die Variante des Laserschweißens im Bereich der Laserschweißstelle 10 angedeutet, die einen vorstehenden Randbereich 27 hier des Anschlussbauteils 20 mit der äußeren Materialschicht 23 der Leitungswandung 25 der ersten Teil-Medienleitung 2 stoffschlüssig verbindet. Die Leitungswandung 25 liegt bei der in Figur 2 gezeigten Ausführungsvariante in einem entsprechend vorgesehenen Absatzbereich 28 der hier gestuft ausgeführten umlaufenden Wandung des Anschlussbauteils 20, außenseitig überdeckt von dem vorstehenden Randbereich 27 des Anschlussbauteils 20. Zumindest der vorstehende Randbereich 27 ist dementsprechend lasertransparent, um die gewünschte Laserschweißung zwischen diesem vorstehenden Randbereich 27 des Anschlussbauteils 20 und der äußeren Materialschicht 23 der Leitungswandung 25 der ersten Teil-Medienleitung 2 vornehmen zu können. Die Materialwahl erfolgt hierfür somit entsprechend geeignet für das Laserschweißen.

In der in Figur 3 gezeigten Ausführungsvariante erfolgt eine stoffschlüssige Verbindung zwischen dem Anschlussbauteil 20 und der Leitungswandung 25 durch Reibschweißen, wobei endseitig an dem Anschlussbauteil 20 eine umlaufende Nut bzw. Tasche 29 vorgesehen ist, in die das Ende der ersten Teil-Medienleitung 2 bzw. von deren Leitungswandung 25 eingefügt ist. Durch Rotieren insbesondere des Anschlussbauteils 20 gegenüber der Leitungswandung 25 bzw. der Teil-Medienleitung 2 kann die Reibschweißung zwischen Anschlussbauteil 20 und zumindest der äußeren Materialschicht 23 der Leitungswandung 25 der Medienleitung 2 oder zumindest der inneren Materialschicht 24 von dieser erzeugt werden. Sowohl beim Laserschweißen, wie es in Figur 2 angedeutet ist, als auch beim Reibschweißen, wie es in Figur 3 angedeutet ist, können dementsprechend die jeweiligen gleichen Materialklassen angehörenden Materialien miteinander stoffschlüssig verbunden werden, zumeist die jeweilige äußere Materialschicht 23 bzw. 33 mit dem Material des jeweiligen Anschlussbauteils 20,21 bzw. 30,31.

Weist eine der Teil-Medienleitungen 2,3 eine dreilagige Leitungswandung 25 bzw. 35 auf, können insbesondere beim Reibschweißen die innerste und die äußerste Materialschicht bezüglich ihres Materials entsprechend an die Anschlussbauteile 20,21 bzw. 30,31 angepasst werden, um eine stoffschlüssige Verbindung zwischen der innersten Schicht und dem Anschlussbauteil bzw. der äußersten Schicht und dem Anschlussbauteil vorsehen zu können.

Als weiter vorteilhaft erweist es sich, die jeweils innerste Schicht, bei den Ausführungsbeispielen nach Figur 1 also die Materialschichten 24 bzw. 34 der beiden Medienleitungen 2,3, dehnfähig auszubilden, mit einer höheren Dehnfähigkeit als die jeweiligen äußeren Materialschichten 23 bzw. 33 dieser beiden Medienleitungen 2,3. Die jeweilige äußere Materialschicht gibt der jeweiligen Leitungswandung 25,35 bzw. der Medienleitung 2,3 jeweils eine mechanische Stabilität, während das Vorsehen einer dehnfähigen inneren Materialschicht 24 bzw. 34 dazu führt, dass lediglich eine Kraftweiterleitung an die äußere Materialschicht 23 bzw. 33 erfolgt, jedoch keine Rissbildung dort, da lediglich die jeweilige innere Materialschicht 24 bzw. 34 bei auf diese einwirkendem Druck gedehnt wird. Ein solcher zusätzlicher bzw. ggf. vorübergehend auftretender und auf die jeweilige Leitungswandung 25 bzw. 35 einwirkender Druck kann durch gefrierendes Medium in den beiden Leitungslumina 26 bzw. 36 bzw. durch axialen und/oder radialen Eisdruck auf die Leitungswandung 25 bzw. 35 auftreten. In Figur 4 ist ein Querschnitt der Medienleitung 2 zu sehen, wobei der Spannungsverlauf bzw. der Verlauf der Dehnung σ über die Leitungswandung 25 hinweg dort eingezeichnet ist. Ersichtlich liegt das Spannungs- bzw. Dehnungsmaximum in der dehnfähigen inneren Materialschicht 24.

Die jeweiligen äußeren Materialschichten 23 bzw. 33 können beispielsweise eine Streck- bzw. elastische Dehnung von 0,5-4%, insbesondere 1,3%, aufweisen, während die Dehnfähigkeit der inneren Materialschichten 24 bzw. 34 demgegenüber beispielsweise 10-30%, insbesondere 20% größer ist und bei 3-11%, insbesondere 5% liegen kann. Die jeweilige äußere Materialschicht 23 bzw. 33 gibt somit mechanische Festigkeit für die Medienleitung 2 bzw. 3, während die dehnfähige jeweilige innere Materialschicht 24 bzw. 34 auf die jeweilige Leitungswandung 25 bzw. 35 einwirkende Druckkraft aufnimmt und das Ausbilden von Rissen in der Leitungswandung verhindert. Bei Vorsehen eines dreilagigen Leitungswandungsaufbaus bei zumindest einer der beiden Teil-Medienleitungen 2,3 kann zumindest eine innere Materialschicht aus einem gegenüber der jeweiligen äußeren Materialschicht deutlich dehnfähigeren Material bestehen bzw. dieses aufweisen. Eine innere Materialschicht kann eine Streckdehnung von beispielsweise 2-5%, insbesondere 2,5% aufweisen.

Die äußere und die innere Materialschicht 23,24 bzw. 33,34 können entweder miteinander verbunden sein oder, um besonders gut ein Weiterschreiten eines Risses bei Rissbildung in einer der Schichten der jeweiligen Leitungswandung 25 bzw. 35 der Medienleitung 2 bzw. 3 zu verhindern, nicht miteinander verbunden sein. Dies kann beispielsweise durch Überextrudieren der jeweiligen äußeren Materialschicht(en) über der jeweiligen inneren Materialschicht der jeweiligen Leitungswandung 25 bzw. 35 erfolgen.

Beispiele für auswählbare Materialien für die jeweiligen äußeren Materialschichten 23,33 bzw. die jeweiligen inneren Materialschichten 24 bzw. 34 der beiden Teil-Medienleitungen 2,3 sind in den nachfolgend gezeigten Tabellen 1-3 wiedergegeben. Die Tabelle 1 beinhaltet dabei hochtemperaturfeste Materialien, die für die innere und äußere Materialschicht 23,24 der im Heißbereich 8 angeordneten ersten Teil-Medienleitung 2 geeignet sind, während in der Tabelle 2 Standardmaterialien aufgelistet sind, die für Normal- bzw. Normtemperatur geeignet sind, für die jeweilige innere und äußere Materialschicht 33,34 der im Kaltbereich 9 angeordneten zweiten Teil-Medienleitung 3. Die Tabellen 1 und 2 enthalten dabei die jeweiligen Materialklassen. In Tabelle 3 finden sich zu diesen einzelne Materialgruppenmitglieder, die für den Aufbau der jeweiligen Materialschichten der Leitungswandungen 25 bzw. 35 der beiden Teil-Medienleitungen 2,3 beliebig kombiniert werden können.

**Tabelle 1: Hochtemperaturmaterialien**

| Außenschicht | Innenschicht |
|---|---|
| PA HT | Fluorkunststoffe |
| PA HT | TPE |
| PPS | Fluorkunststoffe |
| PPS | TPE |
| PA HT | Elastomer HT |

**Tabelle 2: Normtemperaturmaterialien/Standardmaterialien**

| Außenschicht | Innenschicht |
|---|---|
| PA "Standard" | TPE |
| PA "Standard" | Fluorkunststoffe |
| PA "Standard" | Elastomer NT |

**Tabelle 3:**

| Materialgruppe PA HT (äußere Materialschicht) | Materialgruppe Fluorkunststoffe | Materialgruppe TPE | Materialgruppe Elastomer HT | Materialgruppe PA NT (äußere Materialschicht) | Materialgruppe Elastomer NT |
|---|---|---|---|---|---|
| PPA | ETFE | TPU | EPDM | PA12 | NBR |
| PA66 | FEP | TPE-S | FKM | PA11 | EPDM |
| PA612 | PFA | TPE-V | AEM | PA1212 | SBR |
| PA610 | PTFE | TPE-A | HNBR | PA1012 | CR |
| PPS | | TPE-E | Silikon SI | PA6 | HNBR |
| | | F-TPV | Fluorsilikone FVMQ | | IIR |
| | | | | | CSM |
| | | | | | FVMQ (F-Silikon) |
| | | | | | SI (Silikon) |
| | | | | | TPO |
| | | | | | Säurecopolymere |
| | | | | | lonomere |
| | | | | | EVA |
| | | | | | EnBA |
| | | | | | EMA |
| | | | | | |

Im Hinblick auf die im Heißbereich 8 angeordnete, dementsprechend aus hochtemperaturfesten Materialien bestehende erste Teil-Medienleitung 2 kann somit die äußere Materialschicht 23 aus hochtemperaturfestem Polyamid (PA HT) bestehen, während die innere Materialschicht 24 aus einem demgegenüber dehnfähigen Material, wie einem Fluorkunststoff, einem thermoplastischen Elastomer (TPE) oder einem hochtemperaturfesten Elastomer (Elastomer HT) bestehen kann. Wird für die äußere Materialschicht 23 hingegen ein Polyphenylensulfid (PPS) verwendet, kann für die innere Materialschicht 24 ein Fluorkunststoff oder aber ein thermoplastisches Elastomer verwendet werden.

Wie Tabelle 2 entnommen werden kann, kann für die äußere Materialschicht 33 der Teil-Medienleitung 3 beispielsweise ein Normaltemperaturpolyamid (PA "Standard") verwendet werden, das mit einer inneren Materialschicht 34 aus einem thermoplastischen Elastomer (TPE), aus Fluorkunststoffen oder aus Normaltemperatur Elastomer (Elastomer NT) kombiniert werden kann.

Im Hinblick auf den Werkstoff TPE ist ferner anzumerken, dass dieser auch modifiziert werden kann, um für die Verwendung bei höheren Temperaturen geeignet zu sein, dementsprechend beispielsweise für die innere Materialschicht 24 auch TPE-PEBA, also ein thermoplastisches Elastomer mit der Basis Polyamid, verwendet werden kann.

Wie weiter der Tabelle 3 entnommen werden kann, kann als hochtemperaturbeständiges Polyamid beispielsweise Polyphtalamid (PPA), Polyamid-66 (PA66), Polyamid-12 (PA12), Polyamid-612 (PA612), Polyamid-610 (PA610) oder auch Polyphenylensulfid (PPS) verwendet werden. Die Materialgruppe der Fluorkunststoffe umfasst entsprechend der Tabelle 3 Ethylen-Tetrafluorethylen (ETFE), Tetrafluorethylen (FEP), Perfluoralkoxy-Polymere (PFA) und Polytetrafluorethylen (PTFE). Die Materialgruppe der thermoplastischen Elastomere umfasst, wie in der Tabelle 3 aufgelistet, Polyurethan-Elastomer (TPU), Styrol-Blockcopolymere (TPE-S), vernetzte thermoplastische Elastomere auf Olefinbasis (TPE-V), thermoplastische Copolyamide (TPE-A), thermoplastische Copolyester (TPE-E) oder auch ein thermoplastisches Vulkanisat auf Fluorpolymerbasis (F-TPV). Die Gruppe der hochtemperaturfesten Elastomere umfasst zur Verwendung als innere Materialschicht 24 Ethylen-Propylen- Dien-Kautschuk (EPDM), Fluorkautschuk (FKM), Ethylen-AcrylatKautschuk (AEM), hydrierte Nitril- Kautschuke (HNBR), Silikon (SI) und Fluorsilikone (FVQM) Silikon-Kautschuk mit Methyl-, Vinyl- und Fluorgruppen an der Polymerkette.

Für die äußere Materialschicht 33 der Teil-Medienleitung 3 können als Normaltemperatur-Polyamide beispielsweise PA12, PA11, PA1212, PA1012 oder auch PA6 verwendet werden. Sollten mit einer solchen äußeren Materialschicht 33 Vertreter der Normaltemperatur-Elastomere für die innere Materialschicht 34 kombiniert werden, können diese beispielsweise Nitril-Butadien-Kautschuk (NDR), Ethylen-Propylen-Dien-Kautschuk (EPDM), Styrol-Butadien-Kautschuk (SBR), Chlorbutadien-Kautschuk (CR), hydrierter Nitril-Kautschuk (HNBR), ButylKautschuk (IIR), Chlorsulfoniertes Polyethylen (CSM), Silikon- Kautschuk mit Methyl-, Vinyl- und Fluorgruppen an der Polymerkette (FVMQ), also Fluorsilikon, Silikon (SI), TPE mit der Basis Ethylen-Prophylen-Terpolymer (TPE-O bzw. TPO), Säurecopolymere, lonomere, Ethylen-Vinyl-Acetat (EVA), Ethylen-n-butyl-Acetat (EnBA) oder Methyl-Acrylate (EMA) sein. Es besteht somit eine breite Auswahlmöglichkeit insbesondere bezüglich der dehnfähigen Materialien für die jeweilige innere Materialschicht 24 bzw. innere Materialschicht 34 der beiden Medienleitungen 2,3. Die jeweiligen für die äußeren Materialschichten 23 bzw. 33 verwendbaren Materialien PA HT bzw. PA NT bzw. PPS werden vorteilhaft auch für die Anschlussbauteile 20,21 bzw. 30,31 verwendet, um eine Anpassung zum Erzielen einer optimalen stoffschlüssigen Verbindung hier vorzusehen. Wie bereits erwähnt, kann das entsprechende Material für die Anschlussbauteile 20, 21 bzw. 30,31 jeweils noch zusätzlich modifiziert, insbesondere glasfaserverstärkt, sein, um eine noch größere mechanische Stabilität und Steifigkeit im Bereich der Anschlussbauteile vorzusehen, die insbesondere Steckverbindungen, also Steckerteile und Kupplungsteile, sein können.

Bei der Anordnung nach Figur 3 besteht das Anschlussbauteil 20 beispielsweise aus Polyamid (PA) und die innere Materialschicht 24 aus ETFE. Die äußere Materialschicht 25 kann dabei aus PA oder PPA bestehen.

Wie insbesondere den Figuren 1-3 entnommen werden kann, kann die jeweilige äußere Materialschicht 23 bzw. 33 größer oder gleich der inneren Materialschicht 24 bzw. 34 ausgebildet sein, ggf. sogar eine sehr viel größere Schichtdicke aufweisen als die jeweilige innere Materialschicht 24 bzw. 34, die Dicke S₁ der jeweiligen äußeren Materialschicht ist somit größer oder gleich der Dicke S₂ der inneren Materialschicht. Wie bereits erwähnt, können die jeweiligen Materialien der inneren Materialschicht 24 bzw. 34 auch schlagzäh modifiziert sein, um eine Beschädigung sicher zu verhindern. Daher kann beispielsweise für die äußere Materialschicht 23 PPA und für die innere Materialschicht 24 PPA schlagzäh modifiziert verwendet werden bzw. für die äußere Materialschicht 33 PA12 und für innere Materialschicht 34 PA12 schlagzäh modifiziert.

Da die erforderliche Dehnfähigkeit der einzelnen Schichten der jeweiligen Leitungswandung 25 bzw. 35 der Medienleitungen 2,3 von innen nach außen abnimmt, kann je nach Anwendungsfall ein geeignetes dehnfähiges Material für die jeweilige innere Materialschicht 24 bzw. 34 und entsprechend mechanisch stabileres Material für die äußeren Materialschichten 23 bzw. 33 insbesondere aus der Tabelle 3 ausgewählt werden.

Neben dem im Vorstehenden beschrieben und in den Ausführungsbeispielen genannten Ausführungsformen von konfektionierten Medienleitungen bzw. Teil-Medienleitungen von diesen können noch zahlreiche weitere gebildet werden, auch beliebige Kombinationen der vorstehend genannten Ausführungsbeispiele, bei denen jeweils zumindest eine Medienleitung, insbesondere eine beheizbare Medienleitung, mit Leitungswandung und innerem Leitungslumen zum Durchtritt eines Mediums, wie eines gefriergefährdeten Mediums, mit jeweils an den Enden der Medienleitung angeordneten Anschlussbauteilen, beispielsweise in Form von Steckerteilen und Kupplungsteilen, vorgesehen ist, wobei die Leitungswandung aus zumindest zwei Materialschichten besteht und zumindest eines der Anschlussbauteile stoffschlüssig mit zumindest einer der Materialschichten der Leitungswandung verbunden ist und wobei das Material des Anschlussbauteils an das Material dieser zumindest einen Materialschicht der Leitungswandung, mit der die stoffschlüssige Verbindung erfolgt bzw. erfolgen soll, angepasst ist, um eine optimale dichte und strapazierfähige Verbindung zu erzielen. Ferner können noch weitere Beispiele von konfektionierten Medienleitungen gebildet werden, bei denen das Material der innersten Schicht der Leitungswandung eine höhere Dehnfähigkeit aufweist als das Material der äußersten Schicht der Leitungswandung, um eine Beschädigung der Leitungswandung bei auf diese einwirkendem Druck zu vermeiden, wobei dieser Druck beispielsweise durch Volumenzuwachs innerhalb der Medienleitung bei gefrierendem Medium und durch axialen und radialen Eisdruck auftreten kann.

### Bezugszeichenliste

- 1: konfektionierte Medienleitung
- 2: erste Teil-Medienleitung
- 3: zweite Teil-Medienleitung
- 4: Dosierstelle
- 5: Fahrzeugmotor
- 6: Pumpe
- 7: Fahrzeugtank
- 8: Heißbereich
- 9: Kaltbereich
- 10: Laserschweißstelle
- 20: Anschlussbauteil
- 21: Anschlussbauteil
- 22: Heizelement
- 23: äußere Materialschicht
- 24: innere Materialschicht
- 25: Leitungswandung
- 26: Leitungslumen
- 27: vorstehender Randbereich
- 28: Absatzbereich
- 29: umlaufende Nut/Tasche
- 30: Anschlussbauteil
- 31: Anschlussbauteil
- 32: Heizelement
- 33: äußere Materialschicht
- 34: innere Materialschicht
- 35: Leitungswandung
- 36: Leitungslumen
- s₁: Schichtdicke von 23, 33
- S₂: Schichtdicke von 24, 34
- P1: Pfeil (Rotieren fürs Reibschweißen)

## Patentansprüche

1. Konfektionierte Medienleitung (1) mit zumindest einer Medienleitung (2,3), insbesondere beheizbaren Medienleitung, mit Leitungswandung (25,35) und einem inneren Leitungslumen (26,36) zum Durchtritt von Medium, insbesondere eines gefriergefährdeten Mediums, und mit zumindest einem endseitig an der Medienleitung (2,3) angeordneten Anschlussbauteil (20,21,30,31), wobei die Leitungswandung (25,35) der zumindest einen Medienleitung (2,3) aus zumindest zwei Materialschichten (23,24,33,34) besteht und zumindest eines der Anschlussbauteile (20,21,30,31) stoffschlüssig mit zumindest einer der Materialschichten (23,24,33,34) der Leitungswandung (25,35) verbunden ist,
wobei die Materialschichten (23,24,33,34) der zumindest einen Medienleitung (2,3) miteinander ohne Vorsehen einer als Haftvermittlerschicht ausgebildeten Zwischenschicht verbunden sind, wobei das Material des Anschlussbauteils (20,21,30,31) an das Material dieser Materialschicht (23,24,33,34) der Leitungswandung (25,35) angepasst ist, wobei das Material des Anschlussbauteils (20,21,30,31) der gleichen oder ähnlichen Materialklasse angehört wie das Material der zumindest einen mit dem Material des Anschlussbauteils (20,21,30,31) zu verbindenden oder verbundenen Materialschicht (23,33) der Leitungswandung (25,35), wobei als Materialien einer Materialklasse für die zumindest eine Materialschicht (23,33) der Leitungswandung (25,35) und das Anschlussbauteil (20,21,30,31) hochtemperaturbeständiges Polyamid (PA HT) oder Normaltemperaturpolyamid (PA NT) oder Polyphenylensulfid (PPS) oder Polyphthalamid (PPA) für die zumindest eine Materialschicht (23,33) der Leitungswandung (25,35) und das Anschlussbauteil oder Polyamid (PA) für das Anschlussbauteil und PA oder PPA für eine Materialschicht der Leitungswandung vorgesehen sind, und das Material der innersten Schicht (24,34) der Leitungswandung (25,35) der Medienleitung (2,3) eine höhere Dehnfähigkeit aufweist als das Material der äußersten Schicht (23,33) der Leitungswandung (25,35) der Medienleitung (2, 3)_{•}

2. Konfektionierte Medienleitung (1) nach Anspruch 1,
**dadurch gekennzeichnet, dass**
zum Erzielen einer stoffschlüssigen Verbindung das Material des Anschlussbauteils (20,21,30,31) an das Material zumindest der äußersten, für mechanische Stabilität sorgenden Materialschicht (23,33) der Leitungswandung (25,35) der Medienleitung (2,3) angepasst ist.

3. Konfektionierte Medienleitung (1) nach Anspruch 2,
**dadurch gekennzeichnet, dass**
bei Vorsehen von zumindest drei Materialschichten der Leitungswandung (25,35) das Material des Anschlussbauteils (20,21,30,31) dem der innersten und/oder der äußersten Materialschicht entspricht.

4. Konfektionierte Medienleitung (1) nach Anspruch 1,
**dadurch gekennzeichnet, dass**
als Materialien einer Materialklasse für die zumindest eine Materialschicht (23,33) der Leitungswandung (25,35) und das Anschlussbauteil (20,21,30,31) Polyphthalamid (PPA) für die Leitungswandung und modifiziertes, insbesondere glasfaserverstärktes, Polyphthalamid (PPA-GF) für das Anschlussteil oder Polyamid-12 (PA12) für die Leitungswandung und modifiziertes, insbesondere glasfaserverstärktes, Polyamid-12 (PA12-GF) für das Anschlussbauteil vorgesehen sind.

5. Konfektionierte Medienleitung (1) nach einem der vorstehenden Ansprüche,
**dadurch gekennzeichnet, dass**
die stoffschlüssige Verbindung zum Verbinden des Anschlussbauteils (20,21,30,31) mit einer der Materialschichten (23,33) der Leitungswandung (25,35) der Medienleitung (2,3) eine Schweißverbindung ist, insbesondere eine Verbindung durch Laserschweißen oder Reibschweißen.

6. Konfektionierte Medienleitung (1) nach einem der vorstehenden Ansprüche,
**dadurch gekennzeichnet, dass**
das Material der innersten Schicht (24,34) der Leitungswandung (25,35) der Medienleitung (2,3) höhere Streckdehnung aufweist als das Material der äußersten Schicht (23,33) der Leitungswandung (25,35) der Medienleitung (2,3).

7. Konfektionierte Medienleitung (1) nach Anspruch 1,
**dadurch gekennzeichnet, dass**
das Material der innersten Schicht (24,34) der Leitungswandung (25,35) der Medienleitung (2, 3) eine 10 bis 30% höhere Dehnfähigkeit, insbesondere höhere Streckdehnung, insbesondere eine 20% höhere Dehnfähigkeit, als das der äußersten Schicht (23,33) der Leitungswandung (25,35) der Medienleitung (2,3) aufweist.

8. Konfektionierte Medienleitung (1) nach Anspruch 6 oder 7,
**dadurch gekennzeichnet, dass**
die äußerste Materialschicht (23,33) der Leitungswandung (25,35) der Medienleitung (2,3) aus zumindest einem der Medienleitung (2,3) mechanische Festigkeit verleihenden Material besteht und eine Streckdehnung von 0,5 bis 4%, insbesondere 1,3% aufweist.

9. Konfektionierte Medienleitung (1) nach einem der vorstehenden Ansprüche,
**dadurch gekennzeichnet, dass**
die äußerste Materialschicht (23,33) der Leitungswandung (25,35) der Medienleitung (2,3) zumindest die gleiche Stärke (s₁) aufweist wie die innerste Materialschicht (24,34).

10. Konfektionierte Medienleitung (1) nach einem der vorstehenden Ansprüche,
**dadurch gekennzeichnet, dass**
die Materialschichten (23,24,33,34) der zumindest einen Medienleitung (2,3) coextrudiert sind.

11. Konfektionierte Medienleitung (1) nach einem der vorstehenden Ansprüche,
**dadurch gekennzeichnet, dass**
die konfektionierte Medienleitung (1) zumindest zwei Teil-Medienleitungen (2,3) mit zumindest einer Trenn- oder Anschlussstelle (21,30) zwischen diesen und mit jeweils zwei endseitigen Anschlussbauteilen (20,21,30,31) an den Teil-Medienleitungen (2,3) oder zumindest zwei Medienleitungsabschnitte mit endseitigen Anschlussbauteilen umfasst, wobei zumindest eine Materialschicht (23,24) der zumindest einen Teil-Medienleitung (2) oder des zumindest einen Medienleitungsabschnitts zum Anordnen in einem Heißbereich (8) aus hochtemperaturfestem Material besteht, insbesondere bei zumindest drei Materialschichten eine mittlere Schicht oder bei zwei Materialschichten zumindest die äußere Schicht (23).

12. Konfektionierte Medienleitung (1) nach einem der vorstehenden Ansprüche,
**dadurch gekennzeichnet, dass**
Anschlussbauteil ein Steckverbinder ist.

13. Konfektionierte Medienleitung (1) nach einem der vorstehenden Ansprüche,
**dadurch gekennzeichnet, dass**
die äußere (23,33) und die innere (24,34) Materialschicht mehrschichtig ausgebildet ist, wobei jeweils zumindest eine Schicht der mehrschichtigen äußeren Materialschicht (23,33) für die mechanische Stabilität und thermische Stabilität der Medienleitung (2,3) sorgt und zumindest eine Schicht der mehrschichtigen inneren Materialschicht (24,34) eine höhere Streck- oder elastische Dehnfähigkeit als die zumindest eine äußere Schicht der mehrschichtigen äußeren Materialschicht (23,33) oder als eine der anderen Materialschichten aufweist.

## Claims

1. Prefabricated media line (1) having at least one media line (2, 3), in particular heatable media line, having a line wall (25, 35) and an inner line lumen (26, 36) for the passage of medium, in particular of a medium that is at risk of freezing, and having at least one connection component (20, 21, 30, 31) arranged terminally on the media line (2, 3), wherein the line wall (25, 35) of the at least one media line (2, 3) consists of at least two material layers (23, 24, 33, 34) and at least one of the connection components (20, 21, 30, 31) is bonded by substance-to-substance bonding to at least one of the material layers (23, 24, 33, 34) of the line wall (25, 35),
wherein
the material layers (23, 24, 33, 34) of the at least one media line (2, 3) are bonded together without the provision of an intermediate layer in the form of an adhesion promoter layer, wherein the material of the connection component (20, 21, 30, 31) is adapted to the material of that material layer (23, 24, 33, 34) of the line wall (25, 35), wherein the material of the connection component (20, 21, 30, 31) belongs to the same or a similar material class as the material of the at least one material layer (23, 33) of the line wall (25, 35) which is to be bonded or which has been bonded to the material of the connection component (20, 21, 30, 31), wherein there are provided as materials of a material class for the at least one material layer (23, 33) of the line wall (25, 35) and for the connection component (20, 21, 30, 31) high-temperature-resistant polyamide (PA HT) or normal-temperature polyamide (PA NT) or polyphenylene sulfide (PPS) or polyphthalamide (PPA) for the at least one material layer (23, 33) of the line wall (25, 35) and for the connection component or polyamide (PA) for the connection component and PA or PPA for a material layer of the line wall, and the material of the innermost layer (24, 34) of the line wall (25, 35) of the media line (2, 3) has a higher extensibility than the material of the outermost layer (23, 33) of the line wall (25, 35) of the media line (2, 3).

2. Prefabricated media line (1) according to claim 1,
**characterised in that**
in order to achieve substance-to-substance bonding, the material of the connection component (20, 21, 30, 31) is adapted to the material at least of the outermost material layer (23, 33), which provides for mechanical stability, of the line wall (25, 35) of the media line (2, 3).

3. Prefabricated media line (1) according to claim 2,
**characterised in that**
where at least three material layers of the line wall (25, 35) are provided, the material of the connection component (20, 21, 30, 31) corresponds to that of the innermost and/or of the outermost material layer.

4. Prefabricated media line (1) according to claim 1,
**characterised in that**
there are provided as materials of a material class for the at least one material layer (23, 33) of the line wall (25, 35) and for the connection component (20, 21, 30, 31) polyphthalamide (PPA) for the line wall and modified, in particular glass-fibre-reinforced, polyphthalamide (PPA-GF) for the connection component or polyamide-12 (PA12) for the line wall and modified, in particular glass-fibre-reinforced, polyamide-12 (PA12-GF) for the connection component.

5. Prefabricated media line (1) according to any one of the preceding claims, **characterised in that**
the substance-to-substance bond for bonding the connection component (20, 21, 30, 31) to one of the material layers (23, 33) of the line wall (25, 35) of the media line (2, 3) is a welded bond, in particular a bond by laser welding or friction welding.

6. Prefabricated media line (1) according to any one of the preceding claims, **characterised in that**
the material of the innermost layer (24, 34) of the line wall (25, 35) of the media line (2, 3) has a higher tensile elongation than the material of the outermost layer (23, 33) of the line wall (25, 35) of the media line (2, 3).

7. Prefabricated media line (1) according to claim 1,
**characterised in that**
the material of the innermost layer (24, 34) of the line wall (25, 35) of the media line (2, 3) has a 10 to 20% higher extensibility, in particular highertensile elongation, in particular a 20% higher extensibility, than that of the outermost layer (23, 33) of the line wall (25, 35) of the media line (2, 3).

8. Prefabricated media line (1) according to claim 6 or 7,
**characterised in that**
the outermost material layer (23, 33) of the line wall (25, 35) of the media line (2, 3) consists of at least one material which imparts mechanical strength to the media line (2, 3) and has a tensile elongation of from 0.5 to 4%, in particular 1.3%.

9. Prefabricated media line (1) according to any one of the preceding claims, **characterised in that**
the outermost material layer (23, 33) of the line wall (25, 35) of the media line (2, 3) has at least the same thickness (S₁) as the innermost material layer (24, 34).

10. Prefabricated media line (1) according to any one of the preceding claims, **characterised in that**
the material layers (23, 24, 33, 34) of the at least one media line (2, 3) are coextruded.

11. Prefabricated media line (1) according to any one of the preceding claims, **characterised in that**
the prefabricated media line (1) comprises at least two part-media lines (2, 3) having at least one separation or connection point (21, 30) between them and each having two terminal connection components (20, 21, 30, 31) on the part-media lines (2, 3) or at least two media line portions having terminal connection components, wherein at least one material layer (23, 24) of the at least one part-media line (2) or of the at least one media line portion for arrangement in a high-temperature region (8) consists of high-temperature-resistant material, in particular in the case of at least three material layers a middle layer or in the case of two material layers at least the outer layer (23).

12. Prefabricated media line (1) according to any one of the preceding claims, **characterised in that**
the connection component is a plug connector.

13. Prefabricated media line (1) according to any one of the preceding claims, **characterised in that**
the outer material layer (23, 33) and the inner material layer (24, 34) are of multi-layer form, wherein in each case at least one layer of the multi-layer outer material layer (23, 33) provides for mechanical stability and thermal stability of the media line (2, 3) and at least one layer of the multi-layer inner material layer (24, 34) has a higher tensile or elastic extensibility than the at least one outer layer of the multi-layer outer material layer (23, 33) or than one of the other material layers.

## Revendications

1. Ensemble de conduite de fluide (1) avec au moins une conduite de fluide (2, 3), en particulier une conduite de fluide chauffante, avec une paroi de conduite (25, 35) et une lumière intérieure de conduite (26, 36) pour le passage de fluide, en particulier un fluide risquant de geler, et avec au moins un élément de connexion (20, 21, 30, 31) disposé à l'extrémité de la conduite de fluide (2, 3), dans lequel la paroi de conduite (25, 35) de l'au moins une conduite de fluide (2, 3) comprend au moins deux couches de matériau (23, 24, 33, 34), et l'au moins un élément de connexion (20, 21, 30, 31) est relié matériellement à au moins l'une des couches de matériau(23, 24, 33, 34) de la paroi de conduite (25, 35), dans lequel
les couches de matériau (23, 24, 33, 34) de l'au moins une conduite de fluide (2, 3) sont reliées entre elles sans couche intermédiaire favorisant l'adhérence, dans lequel le matériau de l'élément de connexion (20, 21, 30, 31) est relié au matériau de l'une des couches (23, 24, 33, 34) de la paroi de conduite (25, 35), dans lequel la classe du matériau de l'élément de connexion(20,21,30,31) est identique ou similaire à celle du matériau de l'au moins une couche de matériau (23, 33) de la paroi de conduite (25,35) connectée ou devant être connectée à l'élément de connexion(20,21,30,31), dans lequel les classes de matériaux pour l'au moins une couche de matériau (23, 33) de la paroi de conduite (25, 35) et pour l'élément de connexion (20,21,30,31) comprennent le polyamide résistant aux hautes températures (PAHT), le polyamide résistant aux températures normales (PANT), le polysulfure de phénylène (PPS), le polyphtalamide (PPA) pour l'au moins une couche de matériau (23, 33) de la paroi de conduite (25, 35) et pour l'élément de connexion (20,21,30,31), ou le polyamide (PA) pour l'élément de connexion et le PA ou le PPA pour l'une des couches de matériau de la conduite de fluide, le matériau de la couche intérieure (24, 34) de la paroi de conduite (25, 35) de la conduite de fluide (2, 3) présente une extensibilité supérieure à celle du matériau de la couche extérieure (23, 33) de la paroi de conduite (25, 35) de la conduite de fluide (2, 3).

2. Ensemble de conduite de fluide(1)selon la revendication 1,
**caractérisé en ce que**
au moins la couche de matériau la plus externe (23, 33) de la paroi de conduite (25, 35) de la conduite de fluide (2, 3) est adaptée pour réaliser une connexion mécanique stable avec le matériau de l'élément de connexion (20, 21, 30, 31).

3. Ensemble de conduite de fluide(1)selon la revendication 2,
**caractérisé en ce que**
si au moins trois couches de matériau sont prévues dans la paroi de conduite (25, 35), le matériau de l'élément de connexion (20, 21, 30, 31) correspond à celui de la couche de matériau la plus interne et/ou la plus externe.

4. Ensemble de conduite de fluide(1) selon la revendication 1,
**caractérisé en ce que**
les matériaux en tant que classe de matériaux pour l'au moins une couche de matériau (23, 33) de la paroi de conduite (25, 35) et pour l'élément de connexion (20, 21, 30, 31) comprennent le polyphthalamide (PPA)pour la paroi de conduite et ses formes modifiées telles que le polyphthalamide renforcé en fibres de verre (PPAGF) pour l'élément de connexion, ou le polyamide-12 (PA-12)pour la paroi de conduite et ses formes modifiées telles que le polyamide-12 renforcé en fibres de verre (PA12-GF) pour l'élément de connexion.

5. Ensemble de conduite de fluide(1)selon l'une des revendications précédentes, **caractérisé en ce que**
la connexion matérielle pour relier l'élément de connexion (20, 21, 30, 31) à l'une des couches de matériau (23, 33) de la paroi de conduite (25, 35) de la conduite de fluide (2, 3) est une connexion soudée, en particulier une connexion par soudage laser ou par soudage par friction.

6. Ensemble de conduite de fluide (1) selon l'une des revendications précédentes, **caractérisé en ce que**
le matériau de la couche la plus interne (24, 34) de la paroi de conduite (25, 35) de la conduite de fluide (2, 3) présente une extensibilité plus élevée que le matériau de la couche la plus externe (23, 33) de la paroi de conduite (25,35) de la conduite de fluide (2.3).

7. Ensemble de conduite de fluide(1) selon la revendication 1,
**caractérisé en ce que**
le matériau de la couche la plus interne (24, 34) de la paroi de conduite (25, 35) de la conduite de fluide(2, 3) présente une extensibilité supérieure de 10 à 30 %, en particulier un allongement à l'étirement supérieur, en particulier une extensibilité supérieure de 20 % à celle de la couche la plus à l'extérieur (23, 33) de la paroi de conduite (25, 35) de la conduite de fluide (2, 3).

8. Ensemble de conduite de fluide(1) selon l'une des revendications 6 ou 7, **caractérisé en ce que**
la couche de matériau la plus à l'extérieur (23, 33) de la paroi de conduite (25, 35) de la conduite de fluide (2, 3) consiste en au moins un matériau qui confère une résistance mécanique à la conduite de fluide (2, 3) et une extensibilité de 0,5 à 4 %, notamment de 1,3 %.

9. Ensemble de conduite de fluide(1)selon l'une quelconque des revendications précédentes,
**caractérisé en ce que**
la couche de matériau la plus à l'extérieur (23, 33) de la paroi de conduite (25, 35) de la conduite de fluide (2, 3) présente au moins la même épaisseur (S₁) que la couche de matériau la plus à l'intérieur (24, 34).

10. Ensemble de conduite de fluide (1) selon l'une des revendications précédentes, **caractérisé en ce que**
les couches de matériau (23, 24, 33, 34) de l'au moins une conduite de fluide (2, 3) sont co-extrudées.

11. Ensemble de conduite de fluide(1)selon l'une des revendications précédentes, **caractérisé en ce que**
l'ensemble de conduite de fluide (1) comporte au moins deux conduites de fluide partielles (2, 3) avec au moins un point de séparation ou de connexion (21, 30) entre elles, chacune comprenant deux éléments d'extrémité (20, 21, 30,31) de connexion aux conduites de fluide partielles (2, 3), ou au moins deux tronçons de conduites de fluides avec des éléments de connexion d'extrémité, dans lequel au moins une couche de matériau (23, 24) de l'au moins une conduite de fluide partielle (2) ou de l'au moins un tronçon de conduite de fluide disposé dans une zone chaude (8) est constituée d'un matériau résistant aux hautes températures, formant la couche intermédiaire dans le cas de trois couches de matériau, et au moins la couche extérieure (23) dans les cas de deux couches de matériau.

12. Ensemble de conduite de fluide (1)selon l'une des revendications précédentes, **caractérisé en ce que**
l'élément de connexion est un connecteur.

13. Ensemble de conduite de fluide(1)selon l'une des revendications précédentes, **caractérisé en ce que**
les couches de matériau externe (23, 33) et interne (24, 34) sont multicouches, au moins une couche de la couche de matériau externe multicouche (23, 33) assurant la stabilité mécanique et la stabilité thermique de la conduite de fluide (2, 3) et au moins une couche de la couche de matériau interne multicouche (24, 34) présentant une élasticité ou une extensibilité élastique plus élevée qu'au moins une couche externe du matériau externe multicouche (23, 33) ou que l'une des autres couches de matériau.
